# EUROPEAN PATENT APPLICATION

(11) **EP 3 901 785 A1**
(43) Date of publication of application: **27.10.2021**
(21) Application number: 21169531.7
(22) Date of filing: 20.04.2021
(51) Int. Cl.: G06F 16/438, G06K 9/00

(54) **CONTENT FILTERING IN MEDIA PLAYING DEVICES**

(30) Priority: 20.04.2020 US 202063012802 P
(71) Applicant: SoundHound, Inc., Santa Clara, CA 95054 (US)
(72) Inventor: KHOV, Thor S., Santa Clara, 95054 (US); KONG, Terry, Santa Clara, 95054 (US)
(74) Representative: Smith, Jeremy Robert

(57) **Abstract**

The present application relates to content filtering in media playing devices. Video and/or audio media with undesirable content is filtered within a media playing device. Filtering may be configured by users. One type of filter may be for content that looks or sounds like a dog. Filtering renders undesirable content indiscernible. Filtering may be performed by one or more neural networks trained to classify media frames and/or segment media frames as to whether and where undesirable content is present. Filtering may consist of frame replacement for blanking and bleeping, pixelation and distortion, blurring and muffling, object replacement such as with image or sound objects, or erasure and inpainting of image pixels or audio frequency components. Filtering may be performed using appropriate methods within media playing devices as specialized chips, software running on programmable processors, or combinations, and encoded as software in computer readable media.

## Description

### Field of the application

The present application is in the field of artificial intelligence and, in particular, the fields of media filtering and pet behavior modification.

### Background

Consumers observe a lot of content on devices that play audio media and video media. Many consumers wish that certain content will not be presented on their devices. For example, many parents of children wish that pornographic images, obscene speech, and violent images will not be presented.

Providers of media created by large numbers of third parties, such as Google and Facebook, apply generally accepted standards for blocking or removing media that has moderately pornographic or extremely violent content. They may even provide optional levels of media blocking with a feature such as a SafeSearch mode. However, some consumers in general and parents, in particular, might prefer a different standard than that set by the media providers.

For example, some parents might want to allow nudity presented as part of high-brow art or scientifically educational media while other parents might not approve. Some parents might find the sounds of gunshots and images of guns inappropriate and others might find sounds and videos of boxing to be inappropriate. Some might consider a set of certain words to be inappropriate.

Providers offering limited amounts of curated media, such as Netflix for movies and television shows and Audible for audiobooks, provide different access for different account types. Consumers can sign up for special accounts, such as ones for kids, that offer more limited programs than is available to general accounts.

Some media, such as broadcast television shows, are encoded with a rating such as the Motion Picture Association of America (MPAA) film rating systems. Some television sets can detect the encodings. Such television sets allow users to set parental control settings that prevent media from being displayed if its rating is above a certain level.

All of the above content control systems operate at the level of full video or audio programs, meaning that consumers cannot access a lot of media if even a small portion has content that a large organization has deemed inappropriate.

In another important example, many real dogs, when they see dogs on a display or hear audio of dogs growling or barking, will begin to bark. This can annoy neighbors. Some dog owners would like to prevent images and sounds of dogs from being presented on their media devices. No major content providers offer any solution to prevent their users from accessing media with video or audio of dogs.

In yet another example, with audio or video chats between consumers, there is no content control. It is possible for a user presenting audio or video to present content that observers listening to or viewing would find undesirable. Conventional systems provide no mechanism to prevent this.

Some problems to be solved by the present disclosure include
(a) presentation of undesirable content,
(b) coarse granularity of media access control,
(c) inability to control content in live media, and
(d) lack of options for types of content blocking.

### Summary

The present disclosure addresses the problems above by performing content filtering in media playing devices without regard to the source of media. The content filtering can be fine-grained such as being performed at the level of chunks of related audio frames or video frames, on individual frames, or specifically on limited regions within frames. Content filtering may be performed in real-time on live media. Furthermore, it can be highly configurable for different types of content.

Implementations of filtering may include steps of reading original media from an input buffer, processing or modifying the original media to create or produce filtered media, and writing the filtered media to an output buffer. Unlike devices that might read buffered media from sources that are already filtered, such as Netflix or Disney media streaming services, implementations of media filtering within media playing devices can operate on original media that contains one or more undesirable types of content. Furthermore, unlike media playing devices that perform other types of filtering, such as sharpness enhancement, dithering, and contrast control, the processing of media filtering in media playing devices produces a result in which content of the undesirable type is indiscernible to an observer of the filtered media. It is possible that filtering produces artifacts and that careful inspection of artifacts may provide clues to the fact that the filtered media has been filtered. However, the undesirable content is, itself, indiscernible. The input media is modified to produce filtered media such that a presentation of the filtered media will not include undesirable content.

Several approaches can provide such benefits. Classification models, such as appropriately trained neural networks, can detect chunks of frames or individual frames with undesirable content and sequences of video frames or audio frames containing such content can be blanked or replaced by a specific audio segment such as a bleep or image signal such as snow or an icon. Dogs are an example of a specific type of content that can be filtered. Nudity, violence, profanity, and so forth are other examples.

Recognizing certain kinds of content, such as violent actions or profane words requires a model trained with temporal information such as a recurrent neural network or long short-term memory (LSTM) neural network or gated recurrent unit (GRU) neural network.

It is also possible in some approaches to segment video images or audio spectral frequency ranges that contain the information needed to recognize the undesirable content. This may include source identification and source separation within audio and object recognition and vectorization in video. It is possible to perform erasure or other signal degradation techniques such as video pixelation or audio garbling. This allows the observers to appreciate content relevant to a story but without the undesirable content such as offensive or distracting objects in video or background or interfering sounds in audio.

It is also possible to perform replacement of undesirable content. This is possible by, for example, overlaying objects in the region of undesirable content such as a smiley face in video or a horn in audio. Furthermore, it is possible to erase segmented regions of undesirable content and perform inpainting using a neural network model to predict information that might exist within the erased region. This would be performed with a generative model such as a generative neural network trained adversarially (GAN). Generative neural networks predict replacement data at points that, in the original media, provide features that enable observers to discern undesirable content.

It is also possible to use an autoencoder to perform semantic analysis of frames or chunks of media, replace one or more undesirable content features if present, and regenerate the media from its encoding. In a further example, the undesirable content may be recognized by the filter to be present in respective regions of respective video frames of the input media, wherein the modifying comprises modifying the respective regions of the respective video frames such that the undesirable content is no longer present in the respective regions of the respective video frames.

The present disclosure also provides for having multiple selectable and configurable filters. This is possible by, for example, training a neural network on multiple content types with one or more input that conditionally enables filtering of different types of content. This would use relatively less in-device computing, but training would be more complex and not independently configurable for different content types without complete retraining. Selectable filters may also be performed by having multiple filter models in sequence. This requires relatively more processing power in the device but allows independent changing and retraining of content filters, potentially providing menus of hundreds or thousands of user-selectable filters to suit users' tastes.

One or more filter parameters may be stored on non-volatile memory within the media playing device. Such filters can be updated if, for example, better-trained filters become available in the future. This is equivalent to or part of a firmware upgrade, which can happen even without the user being aware.

It is also possible that media comes encoded with one or more configurations of filter parameters, such as weight and bias parameters for a neural network with a standard architecture. Accordingly, a media provider can provide media with the full original content encoded once but with an option for users to choose how they want the content filtered. This is much simpler than transmitting differently encoded versions of essentially the same media for different audiences.

Media playing devices that contain or perform the inventive components or method steps may include specialized media processing chips such as dedicated neural network processing units. Similarly, such dedicated functions may be included within systems-on-chip. The dedicated functions may be performed on video display buffers or audio output buffers directly after all other steps of the processing pipeline.

### Brief description of the Drawings

FIG. 1A shows a spectrogram of audio frames with signal replacement according to an embodiment.
FIG. 1B shows sequence of video frames with frame replacement according to an embodiment.
FIG. 2 shows a process of video object replacement according to an embodiment.
FIG. 3 shows a dog barking at a television.
FIG. 4 shows a dog quietly watching television with degraded content according to an embodiment.
FIG. 5 shows a process of video content erasure and inpainting according to an embodiment.
FIG. 6 shows a process of audio object replacement and inpainting according to an embodiment.
FIG. 7 shows a menu of optional content filters according to an embodiment.
FIG. 8A shows a video packet format according to an embodiment.
FIG. 8B shows a video packet header format according to an embodiment.
FIG. 9 shows a video conferencing arrangement with object replacement according to an embodiment.
FIG. 10 shows a television set according to an embodiment.
FIG. 11 shows a mobile handset according to an embodiment.
FIG. 12A shows a chip with media filtering according to an embodiment.
FIG. 12B shows a diagram of a chip capable of media filtering according to an embodiment.
FIG. 13 shows a non-transitory computer readable medium according to an embodiment.

### Detailed Description

The following describes various design choices for relevant aspects related to the present disclosure. Except where noted, design choices for different aspects are independent of each other and work together in any combination.

Media playing devices obtain media either from storage or from a network connection, such as through a wired network like Ethernet or a wireless network like Wi-Fi, Bluetooth, mobile service, or satellite communication network. Depending on the media type and transport protocol, media playing devices may perform stream demultiplexing, error correction, decoding of compressed bitstreams, image enhancement algorithms such as scaling and sharpness enhancement, compositing such as layering borders, captions, and other text, timing synchronization, and other techniques to prepare video media for display on a screen or audio media for output through speakers. Those types of processing may occur in different orders based on the type of media, different industry-standard protocols, and software stack in the media playing device. Furthermore, each such function may be performed by software on a general-purpose central processing unit (CPU), software in a graphics processing unit (GPU), software on a specialized digital signal processor (DSP), or dedicated hardware logic functions. Any combinations of functions may be performed on a single chip or in multiple chips.

In general, the closer to the output speaker or display that filtering occurs, the more different sources of content can be filtered and the finer and greater control a content filtering device can have for users. Content filtering, according to the present disclosure may be applied at various points in the chain of processing, including being applied to the final output in an audio buffer or a video frame buffer just before it is presented to the observer.

Neural networks are a common type of model for classification of media content. Support vector machines (SVM) and naive Bayes are other machine-learned models that may be appropriate in some contexts. Using SVM or naive Bayes for content filtering requires some amount of feature engineering to perform well, whereas, with deep learning, training creates learned features. For naive Bayes, even after engineering a way to extract features from video or audio, there is an implicit assumption that each feature is conditionally independent, which is rarely true. SVM also creates decision boundaries, so they tend to work best for small datasets with few outliers. For these reasons, machine-learned neural networks, and especially convolutional neural networks (CNN) are the most common approach today. However, other classifiers or generative models may also be possible.

It is useful in many cases to include a temporally recurrent model such as an LSTM or recurrent neural networks (RNN) with gated recurrent units (GRU). While these may be unnecessary for still image processing, their ability to detect features across time enables them to recognize features in audio and video that would be relatively much more difficult to recognize by a non-recurrent model.

An RNN will generally look at a chunk of audio or video at once. A chunk is typically a frame and its one or two left and right neighbors. An LSTM encodes historical information that is relevant to detecting features over time but is still able to generate outputs on a frame-by-frame basis, thereby adding little more than one or a few frames of latency to the media processing pipeline.

### Signal replacement

One way to make undesirable content indiscernible is to replace the full media signal during time periods in which the indiscernible content is discernible. In the context of video, signal replacement is the replacement of video frames. In the context of audio, signal replacement can be the replacement of a range of audio samples in the time domain or the replacement of all frequency components within frames of audio in the frequency domain.

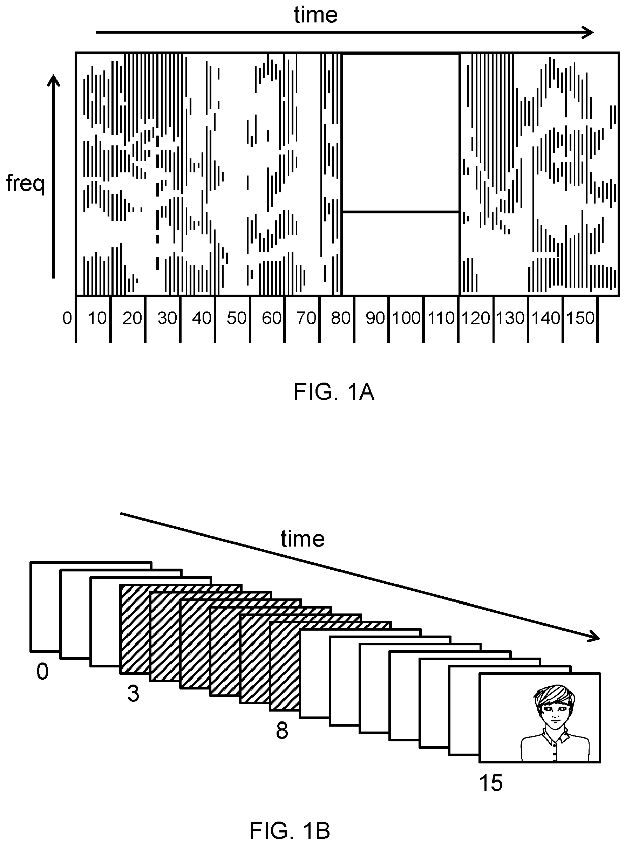

FIG. 1A shows a frequency domain spectrogram of filtered audio containing speech. Time goes left to right from audio frame 0 to audio frame 156. Frequency goes from low to high. The spectrogram shows the intensity of the frequency components at each frame. A common frame rate for audio, especially speech processing, is 100 frames per second. Therefore, the spectrogram of FIG. 1A is showing 1.56 seconds of speech. A typical speech rate is about 5 words per second, so this spectrogram shows approximately 8 average-length words.

An LSTM content filter trained to recognize undesirable sound content runs on the data shown in the spectrogram. At frame 77 it recognizes an undesirable phrase of profanity that is approximately two words long. The filter renders the speech indiscernible. In this example, the filter replaces all audio in frames 77 through 111 with a single frequency. That is notable by the horizontal line during that range of frames. This would produce a sine wave output during those frames. A sine wave in the middle of a range of speech is commonly referred to as a bleep. FIG. 1A shows automatic bleeping of undesirable audio content by a neural content filter.

It is not necessary to create a bleep. Another reasonable behavior is to mute the sound. This would produce a spectrogram with a blank rectangle. Another reasonable behavior is to create white noise, which would create an evenly filled rectangle within the spectrogram. Other types of filling information are reasonable as replacements for the frames that contained undesirable sound content in the original media. It is also possible to preserve some sound from the original media but remove the audible information that a listener would recognize as an undesirable word. This will be discussed in greater detail below.

FIG. 1B shows a sequence of frames of filtered video content containing an image of a person. Time goes left to right from frame 0 to frame 15. At a common frame rate of 30 frames per second, this represents 0.533 seconds of video. An LSTM content filter trained to recognize undesirable visual content runs on the data in the frames. At frame 3 it recognizes an undesirable visual element that is shown for 6 frames (0.2 seconds) such as a hand making an obscene gesture or performing a violent action. In this example, the content filter masks frames 3 to 8 by replacing them with frames that have a simple pattern across the full frame.

It is not necessary to use a simple pattern. A single color, such as black, white, or blue would work, snow (random black and white pixels), classic Society of Motion Picture and Television Engineers (SMPTE) color bars would work, as would a recognizable icon. It is also possible to preserve some of the video image from the original media but render indiscernible just the content that a viewer would recognize as undesirable. This will be discussed in greater detail below.

### Replacement objects

The examples of frame replacement shown in FIG. 1A and FIG. 1B are possible with a classifier neural network having one or a small number of outputs. This is a relatively simple approach to filtering that uses relatively little processing resources. As a result, multiple filters can run within an acceptable power envelope for battery-powered devices and can enable content filtering in devices at price points that consumers will pay.

However, at slightly higher price points and with slightly more power consumption, more sophisticated filtering is possible. CNNs are able to recognize not just the fact that undesirable content is present in media, but the location and size of the undesirable content within the media. In the context of audio, this would be the recognition of what frequency bands contain the information that is useful to recognize the undesirable content. In the context of video, this would be the recognition of the location and range, horizontally and vertically, within a frame that undesirable content is present. In the field of digital cameras, detecting the locations and sizes of faces are well known and enables more accurate focus and image enhancements.

One approach to recognizing the location and size of undesirable content is to use a classifier CNN and, starting from the highest layer and going downward, finding which features in the next lower layer had the greatest contribution to the classification result. At the lowest layer, the midpoint and range of input features that contributed to the classification result with a contribution above a threshold, define the location and size of the undesirable content. The contributing input features might be non-contiguous. This is especially so for audio frequency components. It may be desirable to disregard outliers to avoid unreasonably large replacement objects. It may also be desirable to compare size and location results to those of multiple previous frames with an expectation that they will have deltas representing a reasonably consistent trajectory of motion. This avoids jumpiness in size and motion of replacement objects. A blending algorithm at the edges of the replacement object can make its placement appear more natural. Blending can be implemented by a process of blurring and/or sharpening in an image or frequency component amplitude matching within audio frames.

To perform content filtering, it is possible to use the location and size information of undesirable content to apply a replacement object as a patch overlay. To do so, the filter reads the data representing the replacement object from a replacement object database. This would be an overlay of an object that is not undesirable content. It is possible to define mappings between particular types of undesirable content and particular overlay objects. For example, the word "fuck" could be replaced by the word "fun" or a video image of a gun could be replaced by an ice cream cone.

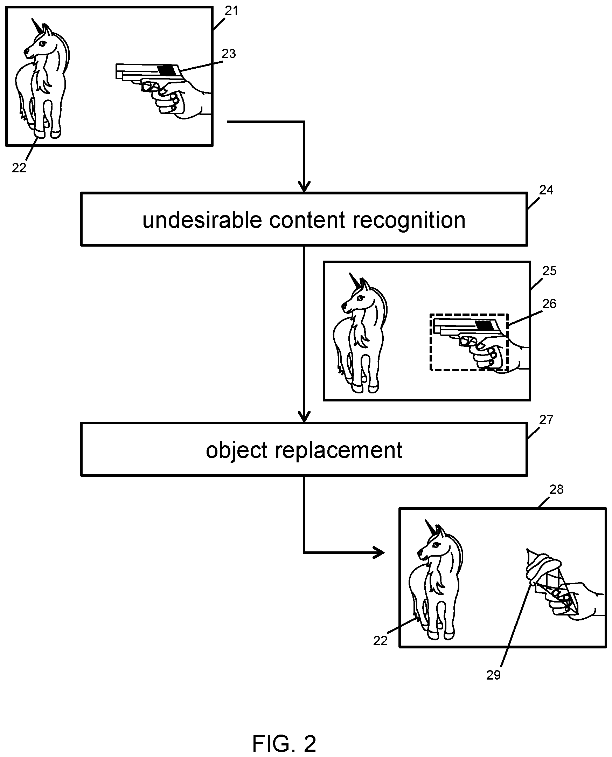

FIG. 2 shows an example of object replacement in a video context. In a video image 21, two pieces of content are visible. One piece of content is a unicorn 22, which is desirable content. One piece of content is a gun in a hand 23, which is undesirable content. The image is processed by a CNN 24 to produce a video frame 25 in which the gun is surrounded by a bounding box 26 that indicates the location and size of the undesirable content. The frame 25 is processed by object replacement 27. The object replacement uses the information that the undesirable content is a gun to map to an ice cream cone as an appropriate replacement object. Image data for an ice cream cone is read from a replacement object database. The image is scaled to the size of the gun and overlaid at the location of the gun. The object replacement produces a video frame 28 in which the unicorn 22 is visible without change but an ice cream cone object 29 is overlaid at the location and with the size of the undesirable content 23.

### Generative filters

However, at slightly higher price points and with slightly more power consumption, more sophisticated generative filters are possible. A generative filter, such as one built on a generative neural network, is one that produces media as output. A common approach to training generative neural networks is adversarial training, which produces generative adversarial networks (GAN).

A generative filter can produce output that is discernibly the same as its input if no undesirable content is present but different from the input if undesirable content is present in such a way that the undesirable content is indiscernible.

### Segmentation and degradation

Segmentation is a process of separating which parts of an image are part of certain content. A result can be a frame of data indicating, for each pixel of an image, whether or not it is part of a piece of content of interest such as a pornographic or violent image. In the context of audio, segmentation can provide, for each frequency component in a frame of audio data, whether or not it is part of a piece of content of interest such as offensive speech or a violent sound.

Signal processing approaches have long been used to perform segmentation. However, neural networks are now able to perform segmentation effectively. A content filter based on a neural network may recognize which data within media represent parts of undesirable content. Such a filter may then perform processing on just that data to degrade it and make the content indiscernible.

One possible type of degrading is silhouetting. That is by replacing all data of the undesirable content, such as audio frame frequency components or video frame pixels, with a constant value. Another possible approach is blurring. This is essentially a process of removing high frequency information. In the context of video, that would appear as a blurred segment of the frame. In the context of audio, that would be blending together different neighboring frequency components within a frame. Note that it does not mean reducing high frequencies components within the frame any more than low frequency components.

Another possible type of degrading is pixelation. This is essentially blurring locally within segments but independently between the segments. In video images, this causes the undesirable content to appear to be made from large rectangles of pixels such that its specific details are indiscernible. In the context of audio, pixelation has the effect of strengthening some and weakening other sub-ranges of frequency components, which will give a general sense of the audio but without complete intelligibility. That means for speech audio it would be possible to tell that the audio has speech but not possible to tell what the speaker is saying. This is sometimes known as garbling the speech.

Another possible type of degrading is muffling. In audio, this is a process of decreasing the levels of frequency components of particular use for recognizing the content. For example, reducing the level of frequencies in the range of human voice can make speech difficult to understand. In the context of video, this would appear as a greying of the undesirable content within the video images, similar to silhouetting or blurring, but leaving information that gives the gist of the content even without it being fully intelligible.

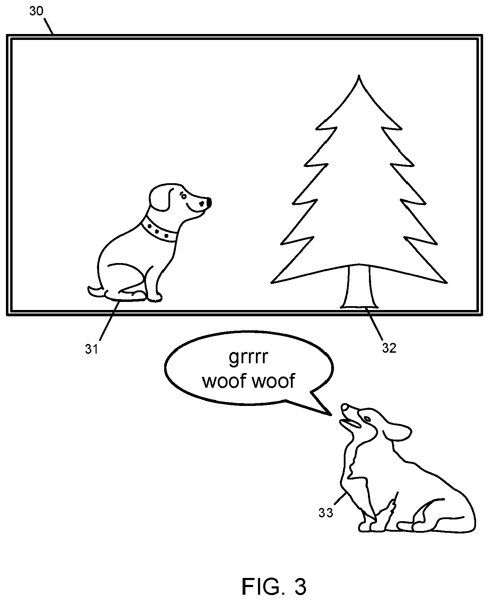

Dogs can recognize images of dogs in videos and sounds of dogs in audio. Often, real dogs become excited when encountering such images or sounds and sometimes bark loudly. The barking can disturb some people such as cranky old ladies in adjacent apartments. Dogs might also be able to recognize trees in videos, but most dogs usually don't bark at trees. FIG. 3 illustrates the particular problem in the field of pet behavior control. A flat-screen television set 30 has content showing dog content 31 and tree content 32. A real dog 33, seeing the media with dog content 31, growls and barks.

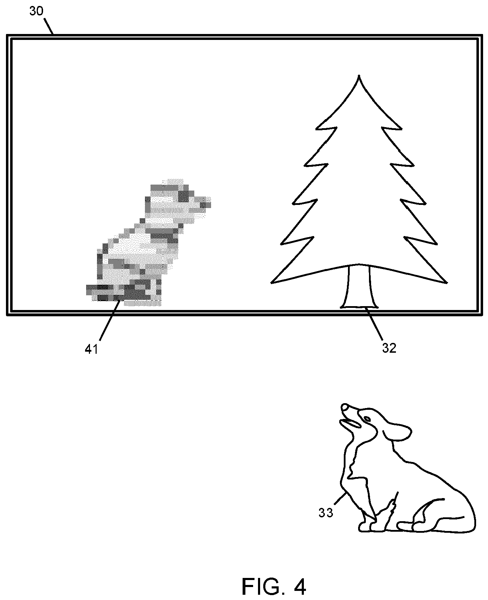

FIG. 4 shows a similar scenario with television set 30 but a generative filter processes the video media, segments data containing dog content, and pixelates the dog content 41. The filter does not change the tree content 32 since the tree is not undesirable content. As a result of the segmentation and degradation, the real dog 33 cannot recognize dog content in the media and so the real dog quietly observes the tree content 32 and indiscernible pixelated segment 41.

Though techniques for segmentation and degradation have existed for a long time, until now, it has never been practical to do them in a consumer device. Doing so has the benefit of working regardless of the media source, giving fine control of the filtering behavior to users, working in real-time for live media, working for audio and video, and working especially well for dogs and dog owners.

### Inpainting

Another approach that relies on generative filters and segmentation is erasure and inpainting of predicted data. This begins with segmentation. Segmentation may be performed simply as a large segment, such as a rectangle within a video image or fixed range within an audio frame. Segmentation may also specifically outline the data representing features of undesirable content within media.

After erasing data for the features of undesirable content, a generative neural network predicts, for each data point, what it should be in an image using a model trained without undesirable content. Erasure does not necessarily require overwriting stored data such as with a zero value. It simply requires identifying data to be replaced.

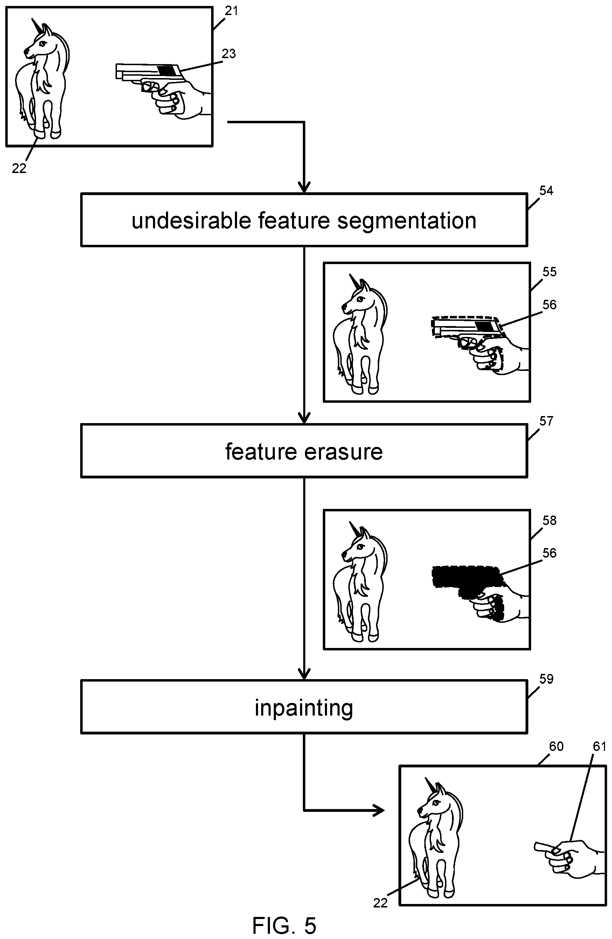

FIG. 5 shows an example of inpainting applied to the input video of FIG. 2. Within a video frame 21, the desirable content of a unicorn 22 and undesirable content of a gun in hand 23 is discernible. The content filter performs a step of segmentation of the undesirable feature. A representation of the segmented video frame 55 shows boundaries of the regions of undesirable content 56. The content filter performs a step of erasure 57. A representation of the video frame with the undesirable content erased 58 shows the segmented boundary 56 with the pixels of the erased undesirable content shown in black. Next, the filter performs a step of inpainting 59. This is possible using various techniques. One example is described in the paper "High-Resolution Image Inpainting using Multi-Scale Neural Patch Synthesis" by Chao Yang, et al., published by the Computer Vision Foundation. The resulting video frame 60 shows the desirable unicorn content 22 unchanged but the undesirable gun in hand content 23 replaced by a pointing finger 61.

Such inpainting works well when the generative neural network that produces the pixels within the erased region is trained on a sufficient number of sample videos that contain similar content, such as hands, but no undesirable content, such as hands with guns. If the training content includes hands with pointing fingers, the inpainting neural network might find that a pointing finger most closely matches with the parts of the hand that are not erased. Therefore, it will predict fill pixel values that produce resulting media that looks like a pointing finger within the region from which the gun was erased.

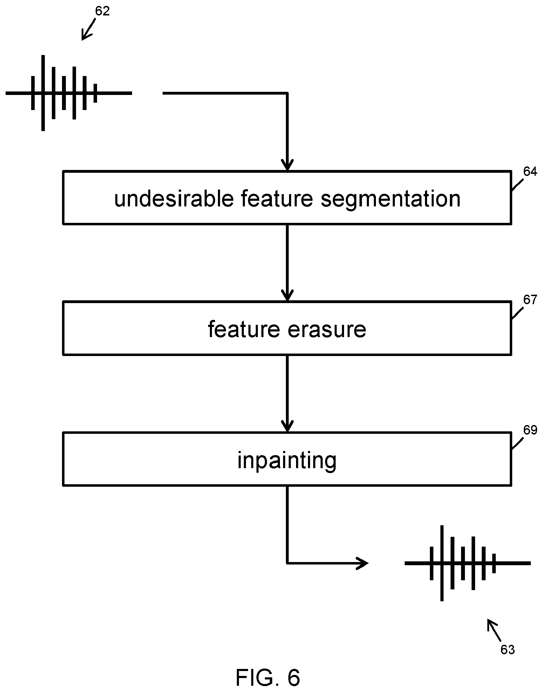

In the context of audio, segmentation, erasure, and inpainting are possible with methods analogous to those described above. The paper "A context encoder for audio inpainting" by Andres Marafioti, et al., published as arXiv:1810.12138v2 provides an example. However, it is more difficult to illustrate in black and white line drawings. FIG. 6 shows an example. Audio signal 62 is processed by a step of segmenting undesirable features 64. Recognizing undesirable audio content typically requires recognizing features across multiple frames. That is true for video images, but especially for audio. As a result, a neural network for audio segmentation should be some sort of RNN. Segmentation will generally happen on frames of audio represented in the frequency domain. This is typically produced by performing a fast Fourier transform (FFT) or similar function on an array of time-sequential samples of varying air pressure waves. Such filters perform segmentation on frequency component values within frames and typically propagate from one frame to the next with small changes in which frequencies are included in the segmentation.

The best techniques for segmentation of audio vary by the type of content to be filtered. A gunshot, for example, is short with a lot of energy across all frequencies. Because it is short, so there is not a lot of temporal information to strengthen a recognition probability. Since it sounds similar to a twig snapping, a book falling, or a person saying the letter K, segmentation for gunshots can be made more accurate if the filter receives an input from a model that performs image classification on the corresponding video. Similarly, recent audio features, such as recognized speech that includes words that come before gunshots, can also provide useful inputs for segmenting gunshots within audio.

In contrast, words tend to span many frames of audio. Recognizing and segmenting words to, for example, remove undesirable profanity content, is relatively easy by gathering significant temporal information. The disadvantage is that to collect enough temporal information to go back in time to perform inpainting to make profanity indiscernible requires delaying the output of audio by enough time to recognize words. This can be improved with accurate phonetic acoustic models and accurate statistical language models.

In FIG. 6, the segmented audio has its distinguishing frequency components in relevant frames erased in step 67. Next, the filter performs a step of inpainting of the erased features 69 to produce resulting output audio 63 with the undesirable content rendered indiscernible.

For the purpose of, for example, erasing undesirable speech, the segmentation doesn't need to select every frequency component within the range of human voice for the duration of the word. It is only necessary to segment enough information that replacing it renders the undesirable speech indiscernible. An inpainting neural network well trained on speech that includes no undesirable words, if a sufficient amount of audio information is not segmented, will generate speech audio with the nearest similar-sounding words in the training data.

### Autoencoding

Another approach to removal of undesirable content is to use an autoencoder neural network. This would typically be implemented with a deep network including one or more CNN layers on the input. A filter based on an autoencoder approach would be trained on audio or video labeled with undesirable content. Ideal labeling would specifically highlight the undesirable content within the labeled media. This would allow training to learn a convolutional filter that works well to recognize undesirable content. However, simply labeling short segments of media as having undesirable content or not without specifically segmenting the content can provide information for a neural network to learn what content is undesirable by learning similarities between media labeled as containing undesirable content.

After training to recognize undesirable content within media, an appropriately trained autoencoder encodes media in a way that a feature vector (a vector of features) includes a feature that represents the undesirable content. By encoding the media, then decoding it with the feature value for undesirable content set to zero, the generated filtered media will not have the undesirable content. To avoid loss of information between encoding and decoding, an autoencoder will not do much compression. In other words, the encoded media will be roughly as wide as the input and decoded media. A key element is that there is a feature value that represents the one or more types of undesirable content.

Such an autoencoder approach can work well for video and audio data. It will typically include some CNN layers and may also have some recurrent layers. Including temporal information in the encoding can allow for more accurate decoding with a smaller encoded feature vector size. This can help to reduce the training time needed to achieve a desired accuracy.

### Multiple filters

Different users of media playing devices have different preferences for filtering. Some might want to filter nudity content. Some might want to filter violent content. Some might want to filter neither or both. Some might particularly want to filter dog content. Several approaches are possible for providing multiple independently configurable filters.

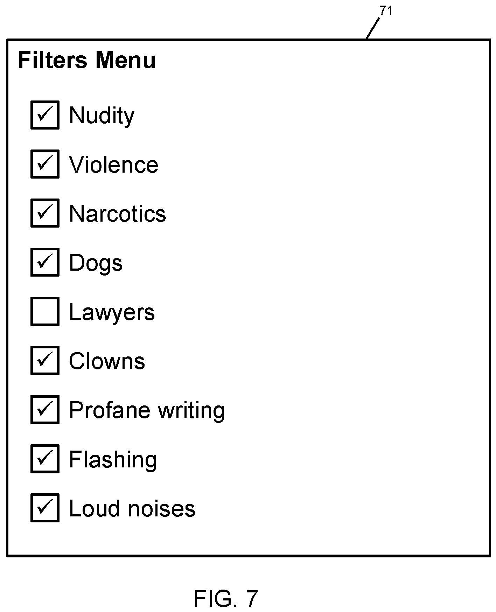

FIG. 7 shows a menu 71 available within a television set such as television set 30 from FIG. 3 and FIG. 4. The menu can be controlled by an infra-red remote controller using an Up/Down and Enter button. Up and down move a highlighting between items on a list of types of content that can be filtered. Enter toggles whether the filter will be enabled or disabled. Menu 71 lists 9 types of content: Nudity, Violence, Narcotics, Dogs, Lawyers, Clowns, Profane writing, Flashing, and Loud noises. FIG. 7 shows all filters selected except for lawyers. These would be typical selections for a user who enjoys watching television shows about the intriguing lives that lawyers lead.

### Neural network with conditions

It is desirable in some implementations to enable a neural network implementation of a filter to condition its outputs on an input parameter that is determined from a user setting.

One possible approach is to train a neural network to recognize multiple types of undesirable content. A CNN-based classifier neural network with multiple outputs is possible. The neural network is trained to compute, for each output, a probability of one type of undesirable content. The device user setting of what types of content to filter can be applied as a mask to the outputs, effectively forcing to zero the probabilities of types of content not to be filtered. For any type of content to filter, if the unmasked probability exceeds a threshold, filtering can follow. The device may then apply one or more filters trained for the type of content to be filtered. The filtering may use any of the approaches described above such as frame replacement, replacement objects, segmentation with degradation, segmentation with inpainting, combinations, or other reasonable approaches to making the undesirable content indiscernible.

One approach to filtering is to train a single or small number of complementary neural networks such as a CNN, classifier, DNN, and generative neural network that operate as a single unit to filter all types of content that the device is designed to handle. Having a single neural network configuration for all types of content with input parameters for conditional processing uses the minimal amount of processing requirements within the device, thereby minimizing the cost for compute capability and the power consumption in the device. However, it requires a relatively lot of training processing for each improvement and update.

### Layering neural networks

Many possible implementations of content filtering in media playing devices use neural networks. Any given neural network may have one or more layers. DNNs may have several layers and some CNNs for high-resolution media have many layers. Simple classifiers may require one or only a small number of layers, which might operate on input feature vectors that are the outputs of an upstream neural network such as a CNN. It is also possible to combine layers of different types of neural networks within one neural network. For example, it is common to include a layer with recurrence between convolutional layers and a downstream classifier. It is even possible to include recurrence within CNN layers, which can help use temporal information in recognizing features. Some content is easier to recognize when moving or changing than statically within a frame. This is very important for speech recognition across frames, but also relevant to video processing where, for example, a striped dog in tall grass is difficult to recognize until it is moving or the difference between a scientific and pornographic depiction of a nude body may be recognizable only by its motion.

Furthermore, rendering undesirable content indiscernible, may use generative neural networks, which may be implemented downstream from a neural network used to recognize undesirable content. They may have intervening logic. Alternatively, a neural network for recognition and a generative neural network for rendering undesirable content indiscernible may be implemented as a single neural network deeper than either alone.

### Modular filters

Some consumer media playing devices may be designed to support multiple independent filters, each trained for a specific type of content. Device makers or their ecosystem partners may offer filters in a manner such as an app store that can provide very large numbers of custom content filters. Some may be free, but others may be sold. Third-party developers with large corpora of training data may monetize it by using it to train specialized filters and then selling those through a filter store. For example, a filter provider may use example images of Roman numerals in different contexts to train a filter that automatically replaces Roman numerals with corresponding Arabic numerals in video. For another example, a company with a lot of voice recordings of the word "Alexa" may offer an audio filter that replaces the word "Alexa" with the phrase "Okay Hound" in audio media. For another example, a filter provider may offer a filter that replaces images and sounds of dogs with images of trees and sounds of rustling leaves.

Based on the processing capabilities of the media playing device, it may be designed with a maximum limit of filters that it supports. If filters are implemented with a standard neural network architecture, devices can be designed with very specific maximum limits on the number of filters. If the filter ecosystem allows greater flexibility for filter 3^{rd} party providers to make trade-offs between accuracy and processing requirements, then device makers must design more conservative limits on the maximum number of filters it allows users to include simultaneously. Filters may be implemented as dynamic-link libraries (DLL) under the control of the operating system for the media playing device.

For the filters that a user selects, the media playing device will apply all of them to media content at an appropriate point within the processing pipeline before it is presented through speakers or a video display. If filters may be implemented that affect all data within a frame (pixels or audio frequency components), noise can accumulate through a series of multiple filters. If filters perform segmentation and only render undesirable content indiscernible within segmented regions, noise will not accumulate within unfiltered regions. In a system that can allow the introduction of noise within unfiltered regions, it would be desirable to design a relatively low limit on the number of filters to prevent significant signal degradation that could cause consumers to be dissatisfied with the media playing device.

Another benefit of modular filters is that they can be independently replaced or upgraded without training a new unitary filter. As with apps for handsets and tablets, filter providers may provide upgrades as they procure more data or improve training algorithms to provide more accurate and precise filters. Such upgrades can occur without requiring any user intervention if devices and the infrastructure for providing filters are designed to provide that.

One possible approach for modular filters is to define them as containerized software. This can allow filter providers great flexibility for choosing a neural network architecture that provides appropriate trade-offs between performance and accuracy for the specific type of content that they filter. This can include different numbers and organization of layers, nodes per layer, recurrent paths, convolution filters, etc. Providing filters as containerized software also allows for other software-programmed customizations beyond just neural filtering features. This can include DSP algorithms or even further user-specific customizations.

Another possible approach to modular filters is to define one or a small number of specific neural network architectures. With this approach, a filter is just a fixed-size set of the constant values of weights and biases for the filter. This is similar to how federated learning packages and passes around parameters or gradients for jointly trained models. Fixing the architecture ensures that a consumer device can process a filter model without having to be overdesigned. This is especially helpful if the model architecture is fixed in dedicated, non-programmable hardware.

On programmable processors, Eigen is a commonly used tool to parallelize computation. By default, Eigen parallelizes the computation across rows (for matrix multiplication). With an 8 core CPU, if computations are all matrix multiplies, then a reduction of 8x in processing time is possible per filter. With N filters, even if the filter models are small, it can be expensive to context switch between filters. This expense is less in an approach that uses a unitary model rather than modular filters for different content types.

It is also possible to define modes that enable groups of filters together, such as a dog mode that would filter out dog bark sounds, images of dogs, and video violence. Having modes, rather than independently selected modular filters, can provide a simpler user interface for device users who are less technically inclined.

### On-device storage

Media playing devices typically have general-purpose programmable applications processors that run software stored in non-volatile memory such as Flash RAM chips. Such chips can also store data that includes static information like a device model and serial number. It can also store user information such as an account name and password. It can also store setting information such as the contrast and brightness of the display. Another type of setting information is a selection of input source. Many display devices have multiple input ports that use signaling standards such as High Definition Media Interface (HDMI), Universal Serial Bus (USB), and wireless HDMI. Furthermore, on-device storage can store the information about which of available filters are enabled, the neural network parameter values for media filters, the containerized software for media filters, overlay replacement objects for replacing undesirable content, and other information about which of various methods to use for rendering undesirable content indiscernible.

Some devices allow for the on-device storage to be updated, including the information about filters. Such updates can be part of firmware updates provided by the device vendor. They can be part of routine updates from an ecosystem filter provider such as a filter store. They can be updated from portable media that a user plugs into the device. By updating the on-device storage, improvements to the performance or capabilities of filtering within media playing devices are possible. The process of updating stored parameters is performed by overwriting the stored parameters within a storage device such as a non-volatile memory chip.

### Media embedding

It is also possible for filter parameters or containerized software to come to the device embedded within files or streams of media information. Many standards organizations such as the Motion Picture Experts Group (MPEG) and the International Standards Organization (ISO) and large companies exist that create de facto standards for media transport such as MPEG transport stream format, Third Generation Partnership Project (3GPP), Microsoft Audio Video Interleave (AVI), Apple QuickTime, and Waveform Audio File format (WAV), among many others.

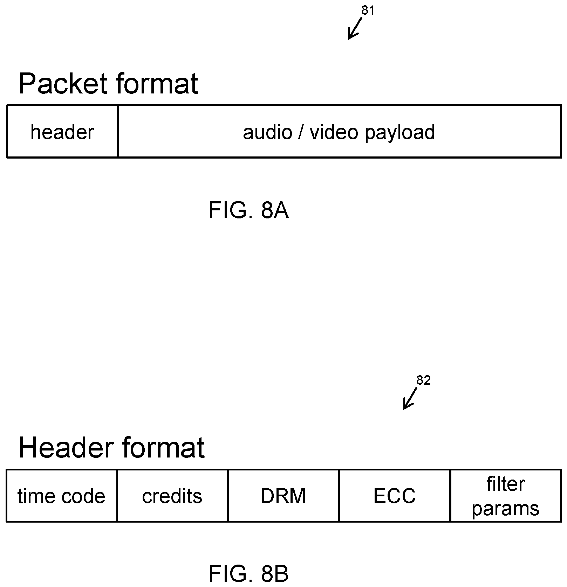

Common to all such transport streams and file formats is that they have header information followed by a payload of audio and video data. FIG. 8A shows an example of information organization within packets of a packetized media transport protocol 81.

The header carries information relevant to how the media payload should be processed. FIG. 8B shows an example of some kinds of information that would exist within a transport protocol header format 82. The header includes a time code for synchronization of playback and detecting dropped packets, credits about the media such as the title, creator, and copyright owner, digital rights management (DRM) information that can prevent playing of the media on devices that do not have appropriate permissions, some error correcting code (ECC) information, and filter parameters. The filter parameters may be simple sets of neural network parameters such as weights and biases, might include containerized executable software, and might include the definition of the selection of other DSP functions to be performed on the payload media. Some formats may provide filter parameters only at the beginning of a program or file. Some formats may encode the filter parameters with each or a subset of all packets to support observers joining in the middle of a program. Some systems may provide the filter parameters at the start of a user requesting to play the media, regardless of what point in the media stream or file the user chooses to start.

While it is possible for providers of movies or television shows to create two or more versions of the show with content appropriate for different audiences, they can only create several versions and have to make judgment calls at the studio level as to what type of content appears in each version. This gives users little control. For user-generated content providers, such as YouTube, it would be essentially impractical to store and stream and cache in local networking hubs many copies of each type of media.

By providing information for a relatively large number of filters within the media stream, it allows users fine control over what content is and is not discernible within the media. It allows this with a single copy of stored, cached, and streamed media. It also allows the media creator to control what filters are available, as appropriate for their artistic choices. Allowing any user-selected filter from a filter store would have the disadvantage of users being able to create content filters that would change the meaning of stories. For example, a user-chosen filter that replaces swastika images with peace signs or replaces gunshots with trombone wah-wah sounds would make a documentary about World War II confusing to observers.

### Real-time filtering

Another advantage of content filtering in media playing devices is that it can operate on real-time live content. Furthermore, whereas live events such as sports and presidential debates are played with a short delay with editing staff monitoring the feed for undesirable content, that is not possible for user-generated or user-to-user content such as Live video broadcasts on Facebook or YouTube or video chats using services such as Apple FaceTime, Microsoft Teams, Google Hangouts, or Zoom video chats or corporate conference calling services.

By performing content filtering in the media playing device such as a television set, a Polycom-type conference call phone, a mobile handset or tablet, or even an automotive entertainment system, it is possible to filter live content in real-time. That is especially true if the filtering is performed near the end of the media processing pipeline, such as in the audio output or video output frame buffer. Doing so, it is possible to overlay a gun video content with an ice cream cone as in FIG. 2, as soon as enough of the gun is visible to recognize the content as a gun. Similarly, it is possible to turn the word "fuck" into "fun" with less added latency than the time needed to output the phoneme K.

Since filtering audio or sequences of video images requires observing multiple frames of information, it is necessary to delay the output somewhat to perform the analysis. Such devices can have a mode to enable and disable one or more types of filtering. With filtering disabled, there is no delay.

The amount of delay needed to perform filtering depends on the amount of context a filter needs for each forward pass over input data. For audio, tens of milliseconds should suffice for many devices. For processing single images, no delay is needed. For processing video with a filter that uses temporal information between frames, multiple frames are needed. 8 frames are enough for most filters. A frame rate of 30 fps would, therefore, require a delay of about 0.25 sec.

One approach is to run the filter on buffered frames of video. However, there is a lot of redundant information in many frames of buffered video. It is possible to save frame buffer storage space and bandwidth by training a filter to run on the coded predicted (P or B) frames of video. Storing the coded prediction information (and, optionally, also the residuals) of many prior video frames is much less expensive than storing and operating on decoded frames for display.

In the context of a device that captures video or audio media and transmits it, it is possible to perform content filtering in the device before transmission. Accordingly, for example, a parent may configure a device such that a child cannot use it to show or say undesirable content to others. In such a configuration, the filtering is performed on the raw captured media near the beginning of the media processing pipeline before encoding and transmission.

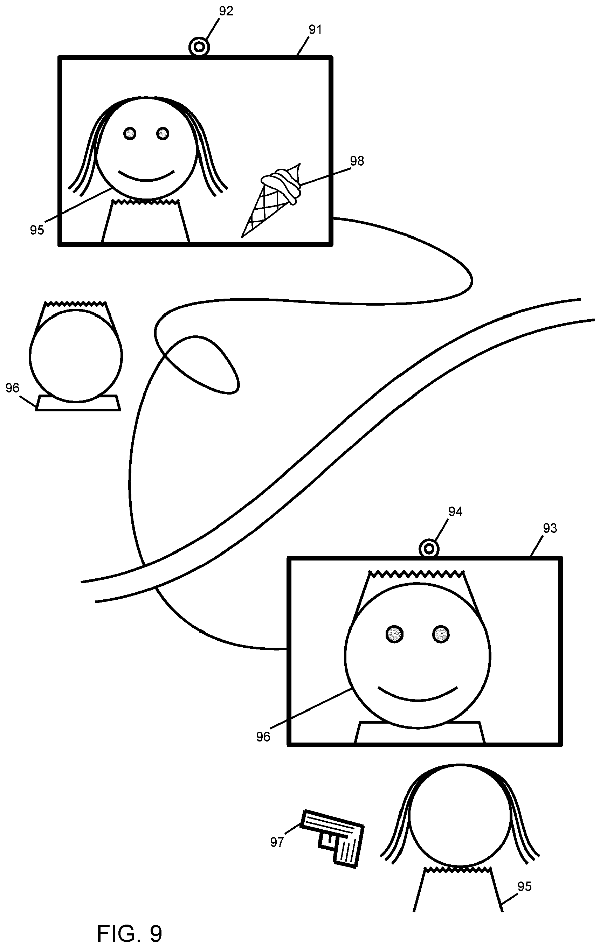

FIG. 9 shows an example 2-way video chatting system in operation. A video display device 91 outputs video while a capture device 92 captures video. The video conferencing system sends the captured video from capture device 92 to video display device 93. Meanwhile, a capture device 94 captures video and sends it over the network to provide the media output for video display 91. Capture device 94 captures video of a user Alice 95. She appears on the video display 91. Capture device 92 captures video of Bob 96. He appears on video display 93.

When Alice 95 pulls out a gun 97, media filtering either in capture device 94 or video display device 91 recognizes the gun 97 as undesirable content. It estimates the location and size, in pixels, of the gun within the video image. It then proceeds to replace the gun with an ice cream cone object 98 as described above with regard to FIG. 2.

This is one example for illustration. It would also be possible to use a filter that does frame replacement so that the video appears to turn off for Bob when Alice pulls out the gun. It would also be possible for a filter to blur or pixelate the image of the gun. It would also be possible for the filter to erase the gun and in-paint pixels in its place such that the image would appear to show a hand without a gun. Other filtering techniques as discussed above are possible.

Furthermore, the techniques described with respect to video in the example shown in FIG. 9 have equivalents in audio that are difficult to illustrate in black and white line drawings. For example, a sound of a gunshot may be muted, replaced by the sound of a horn, distorted, or made to sound like background sounds in the audio in surrounding context before and after the gunshot. Similar approaches are possible for undesirable spoken words that can be muted, bleeped, distorted, replaced by an alternative word that either sounds similar, has a high statistical probability of occurrence within context according to a language model, or both.

### Media playing devices

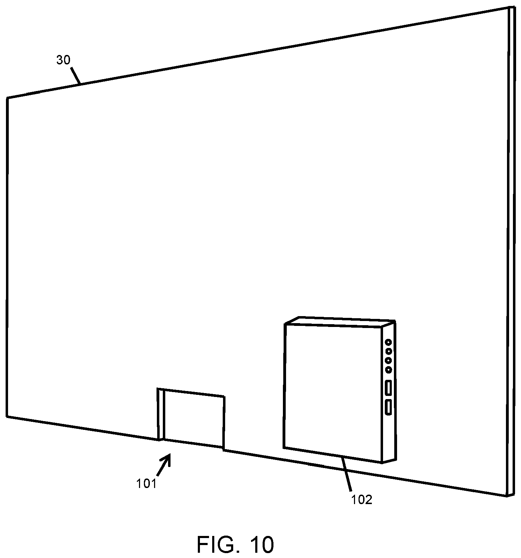

Content filtering can be applied to a wide range of media playing devices. FIG. 10 shows an example of a television set 30. This rear view mostly comprises a large flat panel display. It further comprises a mounting mechanism 101 for attachment to a stand or wall hanging bracket. The television set 30 also has an I/O controller box 102 attached to the back. The box comprises connectors for interfaces such as HDMI video and audio output jacks. It also contains the media processor chip or combination of multiple appropriate chips that will be described in more detail below.

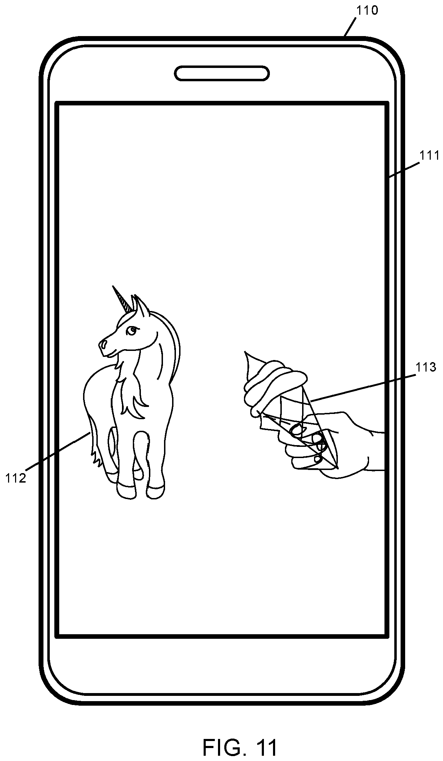

Television sets, because of being a size close to the size of people and dogs, are a frequent source of agitation for dogs. However, media filtering is not just applicable to large stationary displays such as television sets. Even small-screen devices such as mobile handsets and tablets, when presenting sounds and images, can stimulate dogs or present other kinds of undesirable content. FIG. 11 shows an example of a smartphone 110 performing content filtering. It comprises a display screen 111 that shows a streaming video. The streaming video contains a unicorn, 112, which is desirable content and a gun, which is undesirable content. A chip inside the smartphone performs media filtering on the video, recognizes the location and size of the gun within the video media. The chip then reads a replacement object from memory, scales it according to the size of the gun, composites its pixels at the location of the gun content to cover the gun and make it indiscernible. Then the smartphone 110 outputs the filtered video media on screen 111 where not a gun but an ice cream cone 113 is discernible.

Content filtering is useful in applications beyond consumer products. For example, in office environments, it may be desirable for conference calling systems or video conferencing systems to filter content that would create a harassing or hostile work environment. In another example, the video display systems for remote operators of drone aircraft need to look at video images to decide where to steer the airplane and when to drop objects from the airplanes. Such decisions are life-critical. Sometimes content in the video media can be distracting or even confusing. Well-trained neural networks for content filtering can process the images in real-time and perform object replacement to either indicate targets places for dropping objects, places not to drop objects, or simply to remove distracting information from the video. In another example, an amplified sound system for an auditorium or concert hall can have a filter trained to recognize audio features that indicate feedback. The sound system can then perform frame replacement whenever feedback is detected with a less annoying sound that would indicate that a user that their microphone is too close to their speaker.

### Chips

Modern media playing devices are controlled by system-on-chip (SoC) semiconductor devices (chips) such as the Qualcomm SnapDragon series, Apple-designed processors, Samsung-designed processors, among many others. They may also include peripheral semiconductor devices that perform special functions such as dedicated media processing chips, programmed field programmable gate arrays (FPGA), application specific integrated circuits (ASIC), specialized neural network processing chips, and chips that control physical interfaces such as display controllers, digital to analog converters, and voltage regulators.

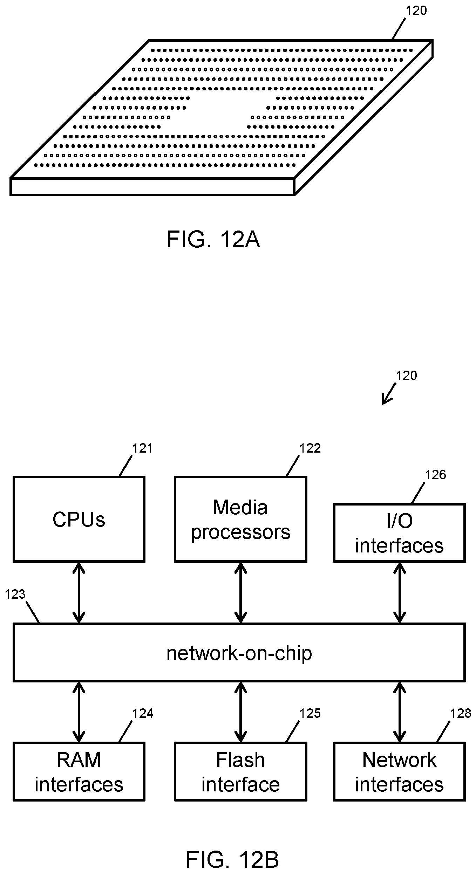

FIG. 12A shows the bottom side of a packaged system-on-chip device 120 with a ball grid array for surface-mount soldering to a printed circuit board. Various package shapes and sizes are possible for various chip implementations.

FIG. 12B shows a block diagram of the SoC 120. It comprises a multicore cluster of computer processor (CPU) cores 121 and a multicore cluster of graphics processor (GPU) cores 122. The processors connect through a network-on-chip 123 to an off-chip dynamic random access memory (DRAM) interface 124 for volatile program and data storage and a Flash interface 125 for non-volatile storage of computer program code, user settings, and filter parameters in a Flash RAM non-transitory computer readable medium. SoC 120 also has I/O interface 126 for outputting video to a video display panel and audio to a speaker. The I/O interfaces 126 also provide connectivity to various I/O interface devices, as needed for different peripherals for the system. The I/O interface enables sensors such as touch screen sensors, geolocation receivers, microphones, speakers, Bluetooth peripherals, and USB devices, such as keyboards and mice, among others. SoC 120 also comprises a network interface 128 to allow the processors to access the Internet through wired or wireless connections such as WiFi, 3G, 4G long-term evolution (LTE), 5G, and other wireless interface standard radios as well as Ethernet connection hardware. By executing instructions stored in RAM devices through interface 124 or Flash devices through interface 125, the CPUs 121 and GPUs 122 perform steps of methods as described and claimed herein.

A chip for media filtering reads original media from an input buffer and writes filtered media to an output buffer. The buffers may be implemented within the chip such as with on-chip static RAM (SRAM) or in external memory, such as in DRAM chips. On-chip memory, such as SRAM is generally much faster, but because manufacturing processes for logic chips do not allow as much memory density as for specialized DRAM manufacturing processes, on-chip buffers generally only accommodate relatively small data chunks. These may be more appropriate for audio processing or video processing at reduced resolution.

### Special processors

Content filtering in media playing devices may be implemented with a combination of chips or a combination of processors within the device. One of those chips may be a specialized processor for media filtering, a general AI accelerator such as an Nvidia Volta, Intel Nervana, Perceive Ergo, or Google tensor processing unit (TPU) chip, or an FPGA. Alternatively, content filtering in media playing devices may be implemented fully within a single chip. In any case, it can be performed with better performance per cost and per milliwatt using specialized processors. Such specialized processors may be designed as cores and offered for license by semiconductor IP companies such as ARM or other companies that design parts of chips in hardware description languages (HDL) but do not make or sell chips themselves. Optimized configurations of Cadence Xtensa and Synopsys ARC processors are other examples.

Some dedicated filtering chips or cores operate on data written into a shared RAM by a multimedia decoder. The filtering chip reads the decoded content and writes a new filtered copy of the content. This is comparable to dedicated demodulators, DRM, and decoder chips and cores in the media streaming technology space and vision and natural language processing (NLP) chips and cores in the machine learning space.

Content filtering may even be performed within a video display controller chip or core as the last step before driving pixels to a display. This would make the filtering effective for absolutely all apps, operating systems, and data sources.

### Software

Many implementations of content filtering in media playing devices work by running software on programmable processors. The software is typically stored either as binary executables or interpreted code or a combination. The software that the processor executes to perform the method and system functions of content filtering is typically stored in non-transitory computer readable media such as punch cards, rotating magnetic disks, or non-volatile semiconductor random access memory (RAM) devices such as Flash chips.

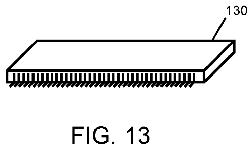

FIG. 13 shows an example non-transitory computer readable medium 130 that is a Flash RAM chip. Data centers commonly use Flash memory to store data and code for server processors. Mobile and stationary consumer devices commonly use Flash memory to store data and code for processors within system-on-chip devices. Non-transitory computer readable medium 130 stores code comprising instructions that, if or when executed by one or more computers, would cause the one or more computers to perform steps of methods described herein. Other non-moving storage media packaged with leads or solder balls are possible.

Some embodiments of physical machines described and claimed herein are programmable in numerous variables, combinations of which provide essentially an infinite variety of operating behaviors. Some embodiments herein are configured by software tools that provide numerous parameters, combinations of which provide for essentially an infinite variety of physical machine embodiments of the disclosure described and claimed. Methods of using such software tools to configure hardware description language representations embody the disclosure described and claimed. Physical machines can embody machines described and claimed herein, such as semiconductor chips, hardware description language representations of the logical or functional behavior of machines according to the disclosure described and claimed, and one or more non-transitory computer readable media arranged to store such hardware description language representations.

Hardware blocks, custom processor instructions, co-processors, and hardware accelerators perform neural network processing or parts of neural network processing algorithms with particularly high performance and power efficiency. This provides long battery life for battery-powered devices and reduces heat removal costs in data centers that serve many client devices simultaneously.

### Boilerplate

Practitioners skilled in the art will recognize many modifications and variations. The modifications and variations include any relevant combination of the disclosed features.

Various embodiments are methods that use the behavior of either or a combination of humans and machines. Some embodiments are systems of one or more non-transitory computer readable media arranged to store such instructions for methods described herein. Some embodiments are physical devices such as semiconductor chips; hardware description language representations of the logical or functional behavior of such devices; and one or more non-transitory computer readable media arranged to store such hardware description language representations.

Descriptions herein reciting principles, features, and embodiments encompass both structural and functional equivalents thereof.

Both humans and dogs will appreciate the benefits of the present technology.

The disclosure comprises the following items:
1. A media playing device comprising:
   an input buffer;
   an output buffer;
   a computer processor; and
   data storage comprising instructions for the processor,
   wherein the processor, by executing the instructions:
   reads original media from the input buffer,
      wherein the original media contains undesirable content;
   processes the original media by a filter to create filtered media,
      wherein the undesirable content is indiscernible to an observer of the filtered media; and
   writes the filtered media to the output buffer.
2. The media playing device of item 1 wherein the undesirable content is a dog.
3. The media playing device of item 1 wherein the media is video.
4. The media playing device of item 1 wherein the media is audio.
5. The media playing device of item 1 wherein the undesirable content is made indiscernible by signal replacement.
6. The media playing device of item 1 wherein the processor further:
   computes a location and a size of the undesirable content;
   reads a replacement object from a replacement object database in the data storage;
   scales the replacement object according to the size of the undesirable content; and
   overlays the replacement object at the location of the undesirable content.
7. The media playing device of item 1 wherein the filter recognizes more than one type of undesirable content, and the undesirable content that is made indiscernible is controlled by a user selection.
8. The media playing device of item 1 wherein parameters for the filter are stored within the data storage, and the processor further:
   receives updated parameters; and
   overwrites the stored parameters with the updated parameters.
9. The media playing device of item 1 wherein the processor further:
   reads a set of filter parameters embedded with the original media; and
   processes the original media by the filter based on the filter parameters.
10. The media playing device of item 1 wherein the filter comprises a neural network having at least one convolutional layer and at least one temporally recurrent layer.
11. The media playing device of item 10 wherein the filter segments at least one region containing the undesirable content and performs degradation within the region.
12. The media playing device of item 10, wherein the filter comprises a generative neural network that predicts replacement data at points that, in the original media, provide features that enable an observer to discern the undesirable content, wherein the filter segments at least one region containing the undesirable content and predicts the replacement data within the region.
13. The media playing device of item 10 wherein the neural network:
   performs an autoencoding to create a feature vector;
   sets a value of a feature that represents the undesirable content to zero; and
   peforms a decoding of the feature vector.
14. A method of filtering media, automatically by a computer, within a media playing device, the method comprising:
   reading original media from an input buffer in the device,
      wherein the original media contains undesirable content;
   processing the original media by a filter to create filtered media,
      wherein the undesirable content is indiscernible to an observer of the filtered media; and
   writing the filtered media to an output buffer in the device.
15. The method of item 14 wherein the undesirable content is a dog.
16. The method of item 14 wherein the media is video.
17. The method of item 14 wherein the media is audio.
18. The method of item 14 wherein the undesirable content is made indiscernible by signal replacement.
19. The method of item 14, further comprising:
   computing a location and a size of the undesirable content;
   reading a replacement object from a replacement object database;
   scaling the replacement object according to the size of the undesirable content; and
   overlaying the replacement object at the location of the undesirable content.
20. The method of item 14 wherein the filter recognizes more than one type of undesirable content, and the undesirable content that is made indiscernible is controlled by a user selection.
21. The method of item 14 wherein parameters for the filter are stored within the device, the method further comprising:
   receiving updated parameters; and
   overwriting the stored parameters with the updated parameters.
22. The method of item 14 further comprising:
   reading a set of filter parameters embedded with the original media,
   wherein processing the original media by the filter comprises processing the original media by the filter based on the filter parameters.
23. The method of item 14 wherein the filter comprises a neural network having at least one convolutional layer and at least one temporally recurrent layer.
24. The method of item 23 wherein the filter segments at least one region containing the undesirable content and performs degradation within the region.
25. The method of item 23 wherein the filter comprises a generative neural network that predicts replacement data at points that, in the original media, provide features that enable an observer to discern the undesirable content, wherein the filter segments at least one region containing the undesirable content and predicts the replacement data within the region.
26. The method of item 23 wherein the neural network:
   performs an autoencoding to create a feature vector;
   sets a value of a feature that represents the undesirable content to zero; and
      performs a decoding of the feature vector.

## Claims

1. A method of filtering media, automatically by a computer, within a media playing device, the method comprising:
reading input media from an input buffer in the device;
processing the input media by a filter to create filtered media, the processing comprising:
determining that the input media contains content recognized by the filter as undesirable content; and
modifying the input media to produce filtered media such that a presentation of the filtered media will not include the undesirable content; and
writing the filtered media to an output buffer in the device.

2. The method of claim 1, wherein the media comprises video and/or audio.

3. The method of claims 1 or 2, wherein the modifying comprises signal replacement.

4. The method of any of claims 1-3, wherein the modifying comprises replacing the undesirable content with alternative content.

5. The method of any of claims 1-4, further comprising:
computing a location and a size of the undesirable content;
reading a replacement object from a replacement object database;
scaling the replacement object according to the size of the undesirable content; and
overlaying the replacement object at the location of the undesirable content.

6. The method of any of claims 1-5, wherein the filter is configured to recognize more than one type of undesirable content, and the types of undesirable content recognized by the filter are controlled by a user selection.

7. The method of any of claims 1-6, further comprising:
reading a set of filter parameters embedded with the input media; and
determining that the input media contains content recognized as undesirable content by the filter based on the filter parameters.

8. The method of any of claims 1-7, wherein parameters for the filter are stored within the device, the method further comprising:
receiving updated parameters; and
overwriting the stored parameters with the updated parameters.

9. The method of any of claims 1-8, wherein the filter comprises a neural network having at least one convolutional layer and at least one temporally recurrent layer.

10. The method of any of claims 1-9, wherein the filter comprises a generative neural network, and the method comprises predicting, by the neural network, replacement data at points that, in the input media, comprise features of the undesirable content; segmenting, by the filter, at least one region containing the undesirable content; and predicting, by the filter, the replacement data within the region.

11. The method of any of claims 1-10, wherein the filter segments at least one region containing the undesirable content and performs degradation within the region.

12. The method of claim 9, further comprising, by the neural network:
performing an autoencoding to create a feature vector;
setting a value of a feature that represents the undesirable content to zero; and
performing a decoding of the feature vector.

13. The method of any preceding claim, wherein the undesirable content is recognized by the filter to be present in respective regions of respective video frames of the input media, wherein the modifying comprises modifying the respective regions of the respective video frames such that the undesirable content is no longer present in the respective regions of the respective video frames.

14. A device comprising:
an input buffer;
an output buffer;
a computer processor; and
data storage comprising instructions for the processor,
wherein the instructions, when executed by the processor, cause the processor to perform the method of any preceding claim.
